# EUROPÄISCHE PATENTSCHRIFT

(11) **EP 2 423 727 B1**
(45) Veröffentlichungstag und Bekanntmachung des Hinweises auf die Patenterteilung: **29.07.2020**
(21) Anmeldenummer: 11178427.8
(22) Anmeldetag: 23.08.2011
(51) Int. Cl.: G02B 21/00, H01S 3/00

(54) **Vorrichtung zum zeitlichen Verschieben von Weißlichtlaserpulsen**
Device for temporal displacement of white light laser pulses
Dispositif de déviation temporelle d'impulsions laser à lumière blanche

(30) Priorität: 27.08.2010 DE 102010037190
(43) Veröffentlichungstag der Anmeldung: 29.02.2012
(73) Patentinhaber: Leica Microsystems CMS GmbH, 35578 Wetzlar (DE)
(72) Erfinder: Schreiber, Frank, 72574 Bad Urach (DE)
(74) Vertreter: Schaumburg und Partner Patentanwälte mbB

(56) Entgegenhaltungen:
- WO-A2-2009/144635
- DE-A1-102008 059 579
- US-A1- 2006 237 666

## Beschreibung

Die Erfindung betrifft ein Lasermikroskop zum Untersuchen einer Probe. Das Lasermikroskop umfasst eine Laserlichtquelle, die Laserlichtpulse erzeugt. Ein optisches Element verbreitert die Laserlichtpulse spektral, die nachfolgend als breitbandige Laserlichtpulse bezeichnet werden.

Gepulstes Laserlicht wird bei Lasermikroskopen regelmäßig dazu verwendet, intrazelluläre Ionenkonzentrationen zu messen. Dabei nutzt man die Erkenntnis, dass sich die Fluoreszenz-Lebenszeit, also die mittlere Verweildauer der Elektronen im angeregten Zustand, mit der Ionenkonzentration ändert. Ein entsprechendes Verfahren ist beispielsweise das Fluoreszenz Lifetime Imaging (FLIM). Die Pulsdauern der dafür benötigten Laserlichtpulse liegen beispielsweise im Bereich von Pikosekunden.

Zum Untersuchen der Fluoreszenz-Lebensdauern unterschiedlicher Farbstoffe muss die Probe häufig mit Laserlichtpulsen unterschiedlicher Wellenlänge angeregt werden. Dazu können unterschiedliche Laser vorgesehen sein, die jeweils Laserlichtpulse einer Wellenlänge oder eines sehr kleinen Wellenlängenbereichs erzeugen.

Aufgrund unterschiedlicher Ausbreitungsgeschwindigkeiten von Laserlicht unterschiedlicher Wellenlänge in Medien umfassen Resonatoren in Laserlichtquellen regelmäßig Kompensationselemente, die bewirken, dass die Laserlichtpulse unterschiedlicher Wellenlänge zeitgleich den Laser verlassen. Die dabei zu kompensierenden Laufzeitunterschiede liegen im Bereich von Femtosekunden.

DE 196 22 359 B4 offenbart eine Vorrichtung zur Einkopplung der Strahlung von Kurzpuls-Lasern in einen mikroskopischen Strahlengang, wobei die Einkopplung mittels mindestens einer dem Laser nachgeordneten Lichtleitfaser erfolgt.

DE 103 13 987 B4 offenbart eine Vorrichtung zum Beleuchten eines Objekts. Das Licht einer Lichtquelle wird in ein mikrostrukturiertes Element eingekoppelt, das das Licht spektral verbreitert.

EP 1 986 030 A1 offenbart ein Lasermikroskop, das eine Laserlichtquelle umfasst. Das Laserlicht wird in eine erste und eine zweite Lichtleitfaser eingekoppelt.

Aus der US 2006/237666 A1 ist ein Lasermikroskop nach dem Oberbegriff des Anspruchs 1 und des Anspruchs 3 bekannt. Dieses Lasermikroskop umfasst eine Kompensationsvorrichtung, die eine Kompensation im Hinblick auf die Gruppengeschwindigkeitsdispersionen der emittierten Laserlichtpulse vornimmt. Dabei ist die Kompensationsvorrichtung aus einem Paar Prismen oder einem Paar Gitter gebildet, deren Abstand voneinander zur Dispersionskompensation steuerbar ist.

Aus der WO2009/144635 A2 ist ein Multiphotonenmikroskop bekannt, das eine Kompensationsvorrichtung in Form einer Phasenplatte umfasst. Die von einer Laserlichtquelle erzeugten Laserlichtpulse durchlaufen die Phasenplatte und erfahren dabei in Abhängigkeit ihrer Auftreffposition auf der Phasenplatte eine Phasenverschiebung, die für eine Kompensation einer Dispersion höherer Ordnung sorgt. Die die Phasenplatte durchlaufenden Laserlichtpulse werden an einem der Phasenplatte nachgeordneten Spiegel reflektiert.

In der DE 10 2008 059579 A1 ist ein Lasermikroskop beschrieben, bei dem erste Laserpulse einer ersten Art und zweite Laserpulse einer davon unterscheidbaren zweiten Art auf die Probe gerichtet werden. Bei gleichzeitigem oder zeitnahem oder zeitkorreliertem Auftreten der beiden Laserpulse auf der Probe entsteht ein optisches Signal, das von einem Detektor erfasst wird. Nach Detektion dieses Signals findet eine elektronische Differenzbildung zwischen den Signalen, die bei gleichzeitig oder zeitnah oder zeitkorreliert auf der Probe auftreffenden Laserpulsen im Detektor entstehen, und den Signalen statt, die bei den nicht gleichzeitig oder zeitnah oder zeitkorreliert auftreffenden Laserpulsen im Detektor entstehen.

Es ist Aufgabe der vorliegenden Erfindung, ein Lasermikroskop zu schaffen, bei dem präzise Fluoreszenz-Lebensdauer-Messungen unterschiedlicher fluoreszierender Farbstoffe gleichzeitig auf besonders einfache Weise möglich sind.

Die Aufgabe wird gelöst durch die Merkmale der unabhängigen Ansprüche 1 bis 3, die Alternativlösungen wiedergeben. Vorteilhafte Ausgestaltungen sind in den Unteransprüchen angegeben.

Die Erfindung zeichnet sich durch eine Kompensationsvorrichtung aus, in der unterschiedliche Wellenlängen aufweisende Anteile der breitbandigen Laserlichtpulse unterschiedliche Weglängen zurücklegen, so dass die unterschiedlichen Anteile zeitgleich auf die Probe treffen.

Bekanntermaßen hat Licht unterschiedlicher Wellenlänge unterschiedliche Ausbreitungsgeschwindigkeiten in einem Medium. Insbesondere haben die unterschiedliche Wellenlängen aufweisenden Anteile der Laserlichtpulse innerhalb des optischen Elements unterschiedliche Ausbreitungsgeschwindigkeiten. Dies hat zur Folge, dass das optische Element die Laserlichtpulse nicht nur spektral verbreitert, sondern die unterschiedliche Wellenlängen aufweisenden Anteile der Laserlichtpulse zeitlich zueinander verschiebt, so dass nachfolgend zwischen den unterschiedlichen Anteilen Laufzeitunterschiede oder zeitliche Versätze bestehen. Diese Laufzeitunterschiede bzw. Versätze können im Bereich von Nanosekunden liegen. Die herkömmlichen Kompensationselemente in den Resonatoren der Laser sind grundsätzlich nicht geeignet, um derart große Laufzeitunterschiede auszugleichen. Die erfindungsgemäße Kompensationsvorrichtung kompensiert nun diese Laufzeitunterschiede, indem die unterschiedlichen Anteile die unterschiedlichen Weglängen in der Kompensationsvorrichtung zurücklegen. Dies ermöglicht auf besonders einfache Weise, die Fluoreszenz-Lebensdauer Messungen präzise durchzuführen, da lediglich eine einzige Laserlichtquelle vorgesehen sein muss und dennoch die Fluoreszenz-Lebensdauern unterschiedlicher Farbstoffe gleichzeitig messbar sind. Dass die unterschiedlichen Anteile des Lichts gleichzeitig auf die Probe treffen, bedeutet in diesem Zusammenhang, dass die Lichtpulse unterschiedlicher Wellenlänge, die jeweils eine Pulsdauer haben, zumindest einander zeitlich überlappen. Vorzugsweise erfolgt die Kompensation mit Hilfe der Kompensationsvorrichtung derart, dass die Lichtpulse zum selben Zeitpunkt auf die Probe treffen und somit die Beleuchtung durch Lichtpulse unterschiedlicher Wellenlänge zum selben Zeitpunkt beginnt. Alternativ oder zusätzlich können auch noch die Pulsdauern oder die Pulsenden aufeinander abgestimmt werden, so dass die Beleuchtung mit Lichtpulsen unterschiedlicher Wellenlänge zum selben Zeitpunkt endet. Gemäß einer Ausführungsform ist die Weglänge, die einer der Anteile innerhalb der Kompensationsvorrichtung zurücklegt, variabel. Dazu ist beispielsweise ein verstellbarer Spiegel vorgesehen, dessen Stellung sich auf die Weglänge auswirkt.

Bei einer weiteren Ausführungsform ist ein Unterschied zwischen zwei Weglängen, die zwei unterschiedliche Anteile des Laserlichts in der Kompensationsvorrichtung zurücklegen, diskret. Das bedeutet in diesem Zusammenhang, dass beispielsweise Anteile benachbarter Wellenlängen in der Kompensationsvorrichtung deutlich unterschiedliche Weglängen mit einem diskreten Abstand zueinander zurücklegen. Dies ermöglicht die Laufzeitunterschiede im Nanosekundenbereich auszugleichen.

Gemäß einer weiteren Ausführungsform wird das Laserlicht in einen ersten Anteil mit einer ersten Wellenlänge und einen zweiten Anteil mit einer zweiten Wellenlänge aufgespalten. Zumindest eine der beiden Wellenlängen ist variabel. In anderen Worten kann die Wellenlänge zumindest eines der Anteile des Laserlichts eingestellt bzw. gewählt werden. Dazu kann beispielsweise ein verstellbarer Spiegel vorgesehen sein, dessen Stellung sich auf die Wellenlänge des entsprechenden Anteils auswirkt.

Einer weiteren Ausführungsform entsprechend ist eine Sensorvorrichtung vorgesehen, die den Laufzeitunterschied zwischen den unterschiedlichen Anteilen erfasst. Eine Stellvorrichtung stellt abhängig von dem Laufzeitunterschied die in der Kompensationsvorrichtung zurückzulegende Weglänge für zumindest einen der Anteile ein, so dass die Laserpulse unterschiedlicher Wellenlänge gleichzeitig auf die Probe treffen.

Bei einer weiteren Ausführungsform sind die unterschiedlichen Anteile nach Durchlaufen der unterschiedlichen Weglängen parallel und versetzt zu den unterschiedlichen Anteilen vor Durchlaufen der unterschiedlichen Weglängen. Dieser Versatz, also ein Abstand zwischen den in die Kompensationsvorrichtung einfallenden Lichtpulsen und den aus der Kompensationsvorrichtung austretenden Lichtpulsen kann beispielsweise mit Hilfe einer Spiegelanordnung erzielt werden, die beispielsweise mehrere zueinander verkippte Spiegel aufweist. Beispielsweise können ein oder mehrere Spiegel, die dazu verwendet werden, die unterschiedlichen Weglängen vorzugeben, so ausgebildet sein, beispielsweise als 90° Doppel-Spiegel, dass die reflektierten Lichtanteile parallel und versetzt zu den einfallenden Lichtanteilen sind.

Bei den Weglängen handelt es sich um geometrische oder um optische Weglängen. In anderen Worten kann die Weglänge variiert werden, indem das Licht unterschiedliche Streckenlängen, also unterschiedliche geometrische Weglängen, durchläuft und/oder indem das Licht unterschiedliche Medien, also optische Weglängen, durchläuft. Zum Einstellen der unterschiedlichen Weglängen kann die Kompensationsvorrichtung einen oder mehrere Spiegel sowie ein oder mehrere Prismen aufweisen, deren Stellungen sich auf die Weglängen auswirken.

Ausführungsbeispiele der Erfindung sind nachfolgend anhand von schematischen Zeichnungen näher erläutert.

Es zeigen:
- Figur 1: ein Lasermikroskop mit einer nicht erfindungsgemässen Ausführungsform einer Kompensationsvorrichtung,
- Figur 2: eine weitere nicht erfindungsgemässe Ausführungsform der Kompensationsvorrichtung,
- Figur 3: eine weitere nicht erfindungsgemässe Ausführungsform der Kompensationsvorrichtung,
- Figur 4: eine erfindungsgemässe Ausführungsform der Kompensationsvorrichtung,
- Figur 5: eine weitere erfindungsgemässe Ausführungsform der Kompensationsvorrichtung,
- Figur 6: eine weitere erfindungsgemässe Ausführungsform der Kompensationsvorrichtung.

Elemente gleicher Konstruktion oder Funktion sind figurenübergreifend mit den gleichen Bezugszeichen gekennzeichnet.

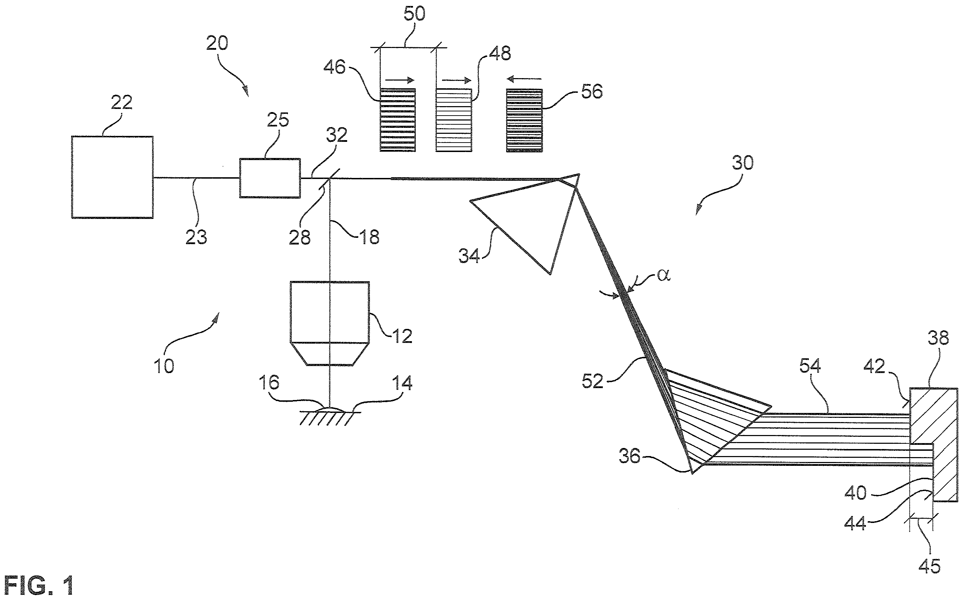

Figur 1 zeigt ein Lasermikroskop 10, das mit Hilfe eines Objektivs 12 ein Beobachten einer auf einem Probentisch 14 liegenden Probe 16 ermöglicht. Dazu wird die Probe 16 mit einem Beleuchtungslichtstrahl 18 beleuchtet. Der Beleuchtungslichtstrahl 18 wird erzeugt, indem zunächst mit Hilfe einer Laserlichtquelle 22 Laserlichtpulse 23 erzeugt werden. Die Laserlichtpulse 23 haben eine einzelne Wellenlänge oder ein äußerst schmales Wellenlängenband, weshalb die Laserlichtpulse 23 auch als schmalbandige Laserlichtpulse 23 bezeichnet werden. Die Laserlichtquelle 22 umfasst beispielsweise einen gepulsten Titanium-Saphir Laser oder eine Laserdiode. Das Lasermikroskop 10 eignet sich zum Messen von Fluoreszenz-Lebensdauern fluoreszierender Farbstoffe. Das Lasermikroskop 10 kann ein Konfokalmikroskop und/oder ein Scanmikroskop sein, wobei die dafür charakteristischen Komponenten, wie zum Beispiel ein Detektionspinhole bzw. eine Scaneinheit, in den Figuren nicht dargestellt sind.

Die schmalbandigen Laserlichtpulse 23 sind auf ein optisches Element 25 gerichtet und durchdringen das optische Element 25. Das optische Element 25 ist mikrostrukturiert und verbreitert das Wellenlängenspektrum der Laserlichtpulse 23. Die Verbreiterung des Wellenlängespektrums ist auf nichtlineare optische Effekte in dem optischen Element 25 zurückzuführen. Derart spektral aufgeweitetes Laserlicht wird auch als Breitband-Laserlicht, breitbandiges Laserlicht oder Weißlicht bezeichnet. Die Einheit aus Laserlichtquelle 22 und optischem Element 25 kann auch als Weißlichtlaser bezeichnet werden. Somit treten aus dem optischen Element 25 breitbandige Laserlichtpulse 32 aus.

Zusätzlich zu der Verbreiterung des Wellenlängenspektrums der Laserlichtpulse 23 bewirkt das optische Element 25, dass unterschiedliche Wellenlängen aufweisende Anteile der breitbandigen Laserlichtpulse 32 zeitlich zueinander versetzt sind. Dadurch entstehen Laufzeitunterschiede, eine Phasenverschiebung und/oder ein zeitlicher Versatz zwischen Laserlichtpulsen unterschiedlicher Wellenlänge. Ferner können die Pulsdauern der Lichtpulse um unterschiedliche Beträge verlängert werden.

Eine Kompensationsvorrichtung 30 zum Kompensieren des zeitlichen Versatzes, der Laufzeitunterschiede und/oder der Pulsdauern umfasst ein erstes Prisma 34, ein zweites Prisma 36 und einen Stufenreflektor 38. Die breitbandigen Laserlichtpulse 32 treffen auf einen ersten Strahlteiler 28 und durchdringen diesen in Richtung hin zu dem ersten Prisma 34. Das erste Prisma 34 spaltet die breitbandigen Laserlichtpulse 32 nach ihren Wellenlängen auf, so dass zwischen dem ersten Prisma 34 und dem zweiten Prisma 36 ein Strahlfächer 52 erzeugt wird. Der Strahlfächer 52 hat einen Öffnungswinkel α. Das zweite Prisma 36 sorgt dafür, dass spektral aufgespaltete Laserlichtpulse 54 parallel zueinander auf den Stufenreflektor 38 treffen.

Der Stufenreflektor 38 weist eine Stufe 40 auf. Oberhalb der Stufe 40 weist der Stufenreflektor 38 eine erste Spiegelfläche 42 auf, auf die langwellige Anteile der spektral aufgespalteten Laserlichtpulse 54 treffen. Auf der Stufe 40 ist eine zweite Spiegelfläche 44 ausgebildet, auf die kurzwellige Anteile der spektral aufgespalteten Laserlichtstrahlen 54 treffen. Die Stufe 40 weist eine Stufenhöhe 45 auf. Aufgrund der beiden Prismen 34, 36 ändert sich die Weglänge, die ein Anteil der Laserlichtpulse 32 in der Kompensationsvorrichtung 30 zurücklegt, kontinuierlich mit der Wellenlänge des entsprechenden Anteils. Aufgrund des Stufenreflektors 38 ändert sich die zurückzulegende Weglänge von einem Anteil einer ersten Wellenlänge zu einem Anteil einer zweiten Wellenlänge diskret, insbesondere um die doppelte Stufenhöhe 45. Die Weglängen der unterschiedlichen Anteile ändern sich somit nicht nur kontinuierlich, sondern auch diskret. Dieser diskrete Weglängenunterschied ermöglicht, Laufzeitunterschiede im Bereich von Nanosekunden zu kompensieren.

Die breitbandigen Laserlichtpulse 32 weisen ein erstes Lichtpaket 46 mit Licht relativ langer Wellenlängen und ein zweites Lichtpaket 48 mit Licht relativ kurzer Wellenlängen auf. Die Lichtpakete 46, 48 können auch als Anteile der breitbandigen Laserlichtpulse 32 bezeichnet werden. Zwischen den beiden Lichtpaketen 46, 48 besteht ein Laufzeitunterschied 50. Die für die unterschiedlichen Anteile zurückzulegenden Weglängen werden mit Hilfe der Prismen 34, 36 und dem Stufenreflektor 38 so eingestellt, dass ein von dem Stufenreflektor 38 zurücklaufendes gemeinsames Lichtpaket 56 Licht unterschiedlicher Wellenlängen umfasst, das gleichzeitig auf die Probe trifft, wobei insbesondere das erste Lichtpaket 46 und das zweite Lichtpaket 48 vermischt sind und zeitgleich auf die Probe treffen. Die Lichtpakete 46, 48 repräsentieren einzelne breitbandige Laserlichtpulse 32. Somit treffen die Laserlichtpulse unterschiedlicher Wellenlänge gleichzeitig auf die Probe 16. Die Kompensationsvorrichtung 30 ermöglicht somit den Laufzeitunterschied 50, der sich aufgrund des Verbreiterns des Wellenlängenspektrums der Laserlichtpulse 23 mit Hilfe des optischen Elements 25 ergibt, zu kompensieren, insbesondere indem Lichtanteile unterschiedlicher Wellenlänge diskret unterschiedliche Weglängen durchlaufen.

Dass die Lichtpulse zeitgleich auf die Probe treffen bedeutet zumindest, dass die Lichtpulse auf der Probe einander zeitlich überlappen. Vorzugsweise ist mit zeitgleich jedoch gemeint, dass die Lichtpulse so auf die Probe treffen, dass die Beleuchtung mittels Lichtpulsen unterschiedlicher Wellenlänge zeitgleich beginnt. Zusätzlich kann mit "zeitgleich" auch gemeint sein, dass die Beleuchtung mittels der Lichtpulse zeitgleich endet oder die Pulsdauern der Lichtpulse gleich lang sind. Alternativ kann mit "zeitgleich" auch gemeint sein, dass die Beleuchtung mittels der Lichtpulse zeitgleich endet oder dass die Beleuchtung mittels der Lichtpulse zeitgleich endet und die Pulsdauern der Lichtpulse gleich lang sind.

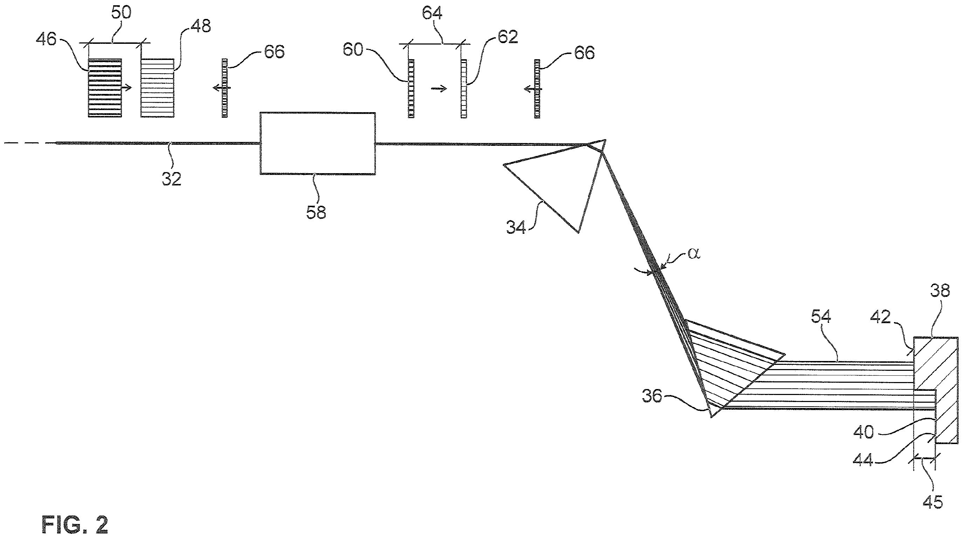

Figur 2 zeigt eine alternative Ausführungsform der Kompensationsvorrichtung 30. Bei dieser Ausführungsform treffen die breitbandigen Laserlichtpulse 32 auf einen ersten Filter 58. Der erste Filter 58 ist beispielsweise ein akusto-optische Filter (AOTF). Der akusto-optische Filter filtert aus den breitbandigen Laserlichtpulsen 32 einen ersten Anteil 60 einer ersten Wellenlänge und einen zweiten Anteil 62 einer zweiten Wellenlänge heraus, die einen weiteren Laufzeitunterschied 64 zueinander haben. Die Größe des weiteren Laufzeitunterschieds 64 hängt im Wesentlichen von den Wellenlängenbereichen ab, die die beiden Anteile 60, 62 aufweisen. Je größer der Unterschied zwischen den Wellenlängenbereichen ist, desto größer ist auch der weitere Laufzeitunterschied 64. Aufgrund der beiden Prismen 34, 36 und des Stufenreflektors 38 ergibt sich entsprechend dem Ausführungsbeispiel in Figur 1 für die beiden Anteile 60, 62 ein Weglängenunterschied beim Durchlaufen der Kompensationsvorrichtung 30, insbesondere ein diskreter Weglängenunterschied, der zu dem weiteren Laufzeitunterschied 64 korrespondiert. Nach Durchlaufen der beiden Prismen 34, 36 und der Reflexion an dem Stufenreflektor 38 besteht zwischen den einzelne Lichtpulse repräsentierenden Anteilen 60, 62 kein Laufzeitunterschied oder zeitlicher Versatz mehr, so dass die vermischten Anteile 66 gemeinsam den ersten Filter 58 passieren und zeitgleich auf die in dieser Figur nicht dargestellte Probe 16 treffen.

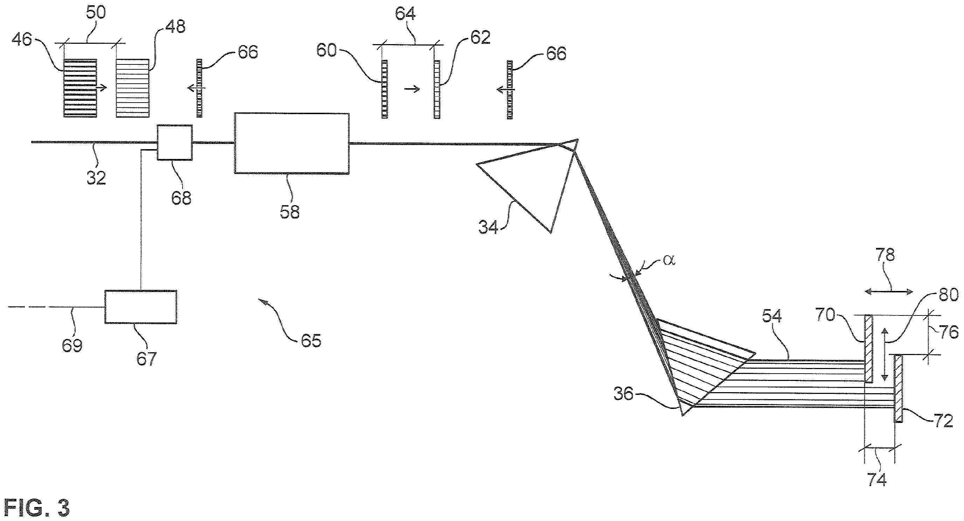

Figur 3 zeigt eine Ausführungsform der Kompensationsvorrichtung 30 zusammen mit einer Sensorvorrichtung 65. Die Sensorvorrichtung 65 umfasst einen Sensor 68, der im Strahlengang der breitbandigen Laserlichtpulse 32 angeordnet ist, neben der gezeigten Darstellung ist auch die Postierung des Sensors 68 an anderer Stelle, bspw. hinter dem Filter 58 möglich. Der Sensor 68 erfasst die Laufzeitunterschiede zwischen Laserlichtpulsen unterschiedlicher Wellenlänge. Der Sensor 68 wird mit Hilfe einer Steuereinrichtung 67 ausgelesen. Die Steuereinrichtung 67 ermittelt abhängig von den ermittelten Laufzeitunterschieden 50, 64 unterschiedliche Weglängen für unterschiedliche Anteile der Laserlichtpulse. Ferner ermittelt die Steuereinrichtung 67 Stellgrößen zum Einstellen von Baugruppen, mit deren Hilfe die Weglängen einstellbar sind. Derartige Baugruppen sind beispielsweise ein erster Stellspiegel 70 und ein zweiter Stellspiegel 72.

Die breitbandigen Laserlichtpulse 32 durchlaufen den ersten Filter 58. Dieser filtert den ersten und den zweiten Anteil 60, 62 aus den breitbandigen Laserlichtpulsen 32 heraus. Die beiden Anteile 60, 62 durchdringen die beiden Prismen 34, 36 in Richtung hin zum den ersten und zweiten Stellspiegel 70, 72. In Ausbreitungsrichtung der spektral aufgespalteten Laserlichtpulse 54 hat der erste Stellspiegel 70 einen ersten Abstand 74 von dem zweiten Stellspiegel 72. Senkrecht zu dieser Ausbreitungsrichtung hat der erste Stellspiegel 70 einen zweiten Abstand 76 zu dem zweiten Stellspiegel 72. Mit Hilfe nicht dargestellter Stellvorrichtungen können die beiden Stellspiegel 70, 72 oder zumindest einer der beiden Stellspiegel 70, 72 entlang einer ersten Bewegungsrichtung 78 parallel zu der Ausbreitungsrichtung und/oder entlang einer zweiten Bewegungsrichtung 80 senkrecht zur Ausbreitungsrichtung bewegt werden.

Der erste Abstand 74 wirkt sich auf eine für Lichtpulse einer vorgegebenen Wellenlänge zurückzulegende Weglänge und damit auf eine Laufzeit dieser Lichtpulse aus. Dabei kann ein diskreter Unterschied in der Weglänge oder Laufzeit zwischen Lichtpulsen unterschiedlicher Wellenlänge mit Hilfe der Stellvorrichtungen eingestellt werden.

Der zweite Abstand 76 wirkt sich darauf aus, welche Anteile der breitbandigen Laserlichtpulse 32, welche Weglängen zurücklegen. Insbesondere gibt der zweite Abstand 76 vor, welche Anteile 60, 62 der breitbandigen Laserlichtpulse 32 eine längere Weglänge zurücklegen sollen und welche eine kürzere Weglänge. Somit können mit Hilfe der Sensorvorrichtung 65 in Abhängigkeit des weiteren Laufzeitunterschieds 64 die für die Anteile 60, 62 zurückzulegenden Weglängen so verändert werden, sowie deren Wellenlänge so begrenzt werden, dass rücklaufend ein bezüglich der Wellenlängen vermischter Anteil 66 durch den ersten Filter 58 tritt und hin zu der Probe 16 gelenkt wird. Der vermischte Anteil 66 repräsentiert einen einzelnen Laserlichtpuls mit Licht unterschiedlicher Wellenlänge.

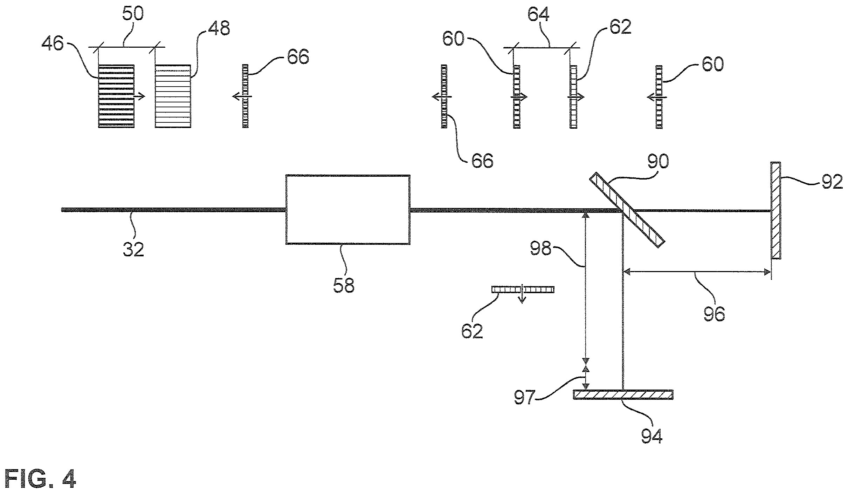

Figur 4 zeigt eine alternative erfindungsgemässe Ausführungsform der Kompensationsvorrichtung 30, bei der insbesondere die Art und Weise, wie die Weglänge variiert wird, anders ist als bei den vorstehend genannten Ausführungsformen. Ansonsten korrespondiert diese Ausführungsform der Kompensationsvorrichtung 30 zu den vorstehenden genannten Ausführungsformen. Aus dem ersten Filter 58 treten die Anteile 60, 62 aus. Die Anteile 60, 62 treffen auf einen zweiten Strahlteiler 90, der den zweiten Anteil 62 hin zu einem ersten Stellreflektor 94 ablenkt und den ersten Anteil 60 hin zu einem Reflektor 92 durchlässt. Das Licht durchläuft von dem zweiten Strahlteiler 90 aus hin zu dem Reflektor 92 eine erste Weglänge 96, die beispielsweise fest ist. Der zweite Anteil 62 durchläuft vom zweiten Strahlteiler 90 aus hin zu dem Stellreflektor 94 eine zweite Weglänge 98 und eine Stellweglänge 97. Der Stellreflektor 94 ist entlang der Stellweglänge 97 derart verstellbar, dass die Stellweglänge 97 zwischen null und einem Wert größer null variierbar ist. Insbesondere ist die Stellweglänge 97 abhängig von dem zu kompensierenden weiteren Laufzeitunterschied 64 einstellbar. Die Wellenlängen des ersten und des zweiten Anteils 60, 62 sind durch den ersten Filter 58 und den zweiten Strahlteiler 90 fest vorgebbar.

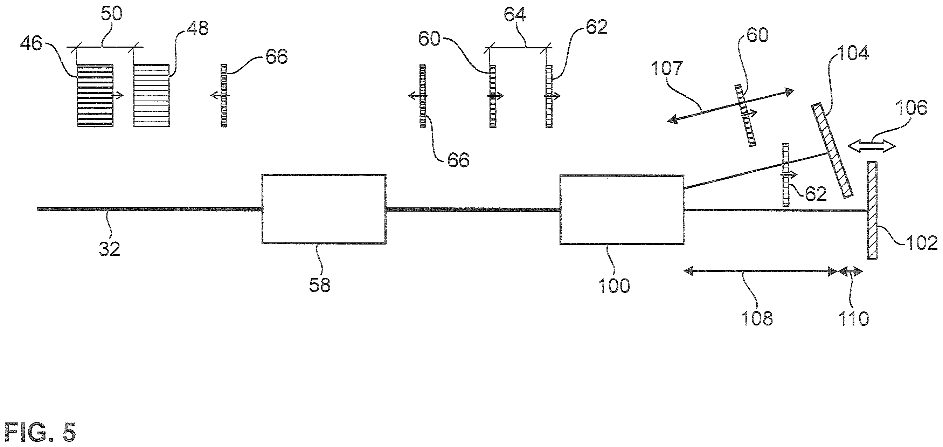

Figur 5 zeigt eine weitere erfindungsgemässe Ausführungsform der Kompensationsvorrichtung 30. Diese Ausführungsform weist einen zweiten Filter 100 auf, der beispielsweise ebenfalls ein akusto-optischer Filter (AOTF) ist. Der zweite Filter 100 bewirkt, dass der erste Anteil 60 des Lichts einen anderen Weg, insbesondere hin zu einem vierten Reflektor 104, nimmt, als der zweite Anteil 62, der hin zu einem dritten Reflektor 102 gelenkt wird. Zwischen dem zweiten Filter 100 und dem dritten Reflektor 102 legt der zweite Anteil 62 eine dritte Weglänge 108 und eine vierte Weglänge 110, die in diesem Zusammenhang auch als Stellweglänge bezeichnet werden kann, zurück. Zwischen dem zweiten Filter 100 und dem vierten Reflektor 104 legt der erste Anteil 60 des Lichts eine fünfte Weglänge 107 zurück. Der dritte Reflektor 102 ist entlang einer dritten Bewegungsrichtung bewegbar, wodurch die vierte Weglänge 110 einstellbar ist. Dadurch lässt sich der Weglängenunterschied zwischen den Anteilen 60, 62 einstellen, wodurch der Laufzeitunterschied kompensierbar ist. Die Verwendung der akusto-optischen Filter ermöglicht eine schnelle Schaltbarkeit und eine Wählbarkeit der Wellenlängen. Das heißt, dass die Wellenlängen der Anteile 60, 62 veränderbar und insbesondere schnell veränderbar sind. Die schnelle Veränderbarkeit der Wellenlängen ergibt sich daraus, dass die akusto-optischen Filter zum Verändern der Wellenlängen wenig bewegte Teile umfassen.

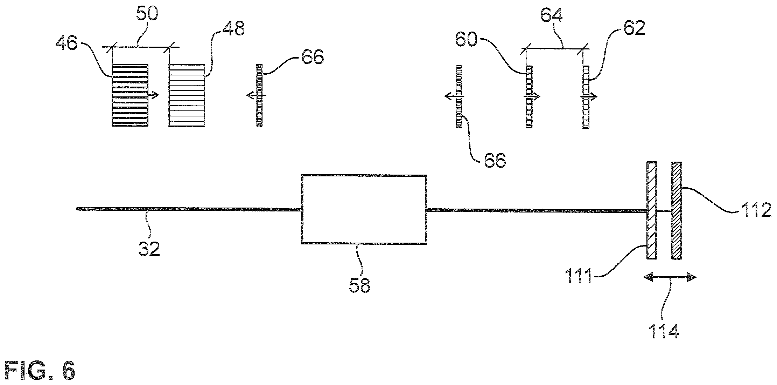

Figur 6 zeigt eine erfindungsgemässe Ausführungsform der Kompensationsvorrichtung 30, bei der die unterschiedliche Weglänge mit Hilfe einer verstellbaren teildurchlässigen Spiegelfläche 111 eingestellt wird. Dabei durchläuft der erste Anteil 60 lediglich die Weglänge zwischen dem ersten Filter 58 und der teildurchlässigen Spiegelfläche 111 und wird dann reflektiert. Im Gegensatz dazu durchläuft der zweite Anteil 62 die Weglänge von dem ersten Filter 58 bis hin zu einem Spiegel 112 und wird dort reflektiert. Der für den zweiten Anteil 62 zurückzulegende Weg ist somit um den doppelten Abstand zwischen dem Spiegel 112 und der teildurchlässigen Spiegelfläche 111 länger als für den ersten Anteil 60. Die teildurchlässige Spiegelfläche 111 oder der Spiegel 112 sind entlang eines Stellweges 114 verstellbar, wodurch der Abstand zwischen dem Spiegel 112 und der teildurchlässigen Spiegelfläche 111 und damit der Weglängenunterschied für den ersten und zweiten Anteil 60, 62 einstellbar ist.

Bei den in der Kompensationsvorrichtung zurückzulegenden Weglängen handelt es sich um geometrische oder um optische Weglängen. Eine geometrische Weglänge entspricht einer messbaren Streckenlänge. Eine optische Weglänge wird beispielsweise durch einen Brechungsindex eines Mediums bestimmt. Die optische Weglänge wird somit durch die Ausbreitungsgeschwindigkeit von Licht in einem Medium bestimmt. Die optische Weglänge kann gegenüber der Weglänge in Luft beispielsweise verlängert werden, indem das Licht anstatt durch Luft durch ein Medium geleitet wird, in dem die Ausbreitungsgeschwindigkeit kleiner ist als in der Luft. Zusätzlich oder alternativ zu den veränderbaren geometrischen Weglängen können zum Kompensieren der Laufzeitunterschiede oder zeitlichen Versätze auch die optischen Weglängen für Lichtpulse unterschiedlicher Wellenlänge unterschiedlich lang und/oder veränderbar lang gewählt werden.

Die vorstehend genannten Ausführungsformen der Kompensationsvorrichtung 30 können als Alternativen in dem Lasermikroskop 10 angeordnet werden. Ferner können alle genannten Ausführungsformen mit der Sensorvorrichtung 65 gekoppelt sein. Ferner können bei jeder der Ausführungsformen die Lichtpakete 46, 48 oder die Anteile 60, 62 parallel und versetzt, also mit positivem Abstand, zu dem gemeinsamen Lichtpaket 56 bzw. den vermischten Anteilen 66 verlaufen. Dazu kann beispielsweise eine Spiegelanordnung vorgesehen sein, die zueinander verkippte Spiegel aufweisen kann. Insbesondere können der Stufenreflektor 38, die Stellspiegel 70, 72, die Reflektoren 92, 94, 102, 104 oder die Spiegel 111, 112 als 90° Doppel-Reflektor ausgebildet sein, die einen parallelen Versatz der einfallenden Lichtpulse zu den reflektierten Lichtpulsen bewirken. Ferner können die beiden Stellspiegel 70,72, der Stellreflektor 94, der dritte Reflektor 102 und/oder die Spiegelfläche 111 als verstellbare Elemente bezeichnet werden.

### Bezugszeichenliste:

- 10: Lasermikroskop
- 12: Objektiv
- 14: Probentisch
- 16: Probe
- 18: Beleuchtungslichtstrahl
- 20: Beleuchtungsvorrichtung
- 22: Laserlichtquelle
- 23: Laserlichtpulse
- 25: optisches Element
- 28: erster Strahlteiler
- 30: Kompensationsvorrichtung
- 32: breitbandige Laserlichtpulse
- 34: erstes Prisma
- 36: zweites Prisma
- 38: Stufenreflektor
- 40: Stufe
- 42: erste Spiegelfläche
- 44: zweite Spiegelfläche
- 45: Stufenhöhe
- 46: erstes Lichtpaket
- 48: zweites Lichtpaket
- 50: Laufzeitunterschied
- 52: Strahlfächer
- 54: spektral aufgespaltete Laserlichtpulse
- 56: gemeinsames Lichtpaket
- 58: erster Filter
- 60: erster Anteil
- 62: zweiter Anteil
- 64: weiterer Laufzeitunterschied
- 65: Sensorvorrichtung
- 66: vermischter Anteil
- 67: Steuereinrichtung
- 68: Sensor
- 69: Steuerleitung
- 70: erster Stellspiegel
- 72: zweiter Stellspiegel
- 74: erster Abstand
- 76: zweiter Abstand
- 78: erste Bewegungsrichtung
- 80: zweite Bewegungsrichtung
- 90: zweiter Strahlteiler
- 92: Reflektor
- 94: Stellreflektor
- 96: erste Weglänge
- 97: Stellweglänge
- 98: zweite Weglänge
- 100: zweiter Filter
- 102: dritter Reflektor
- 104: vierter Reflektor
- 106: dritte Bewegungsrichtung
- 107: fünfte Weglänge
- 108: dritte Weglänge
- 110: vierte Weglänge
- 111: teildurchlässige Spiegelfläche
- 112: Spiegel
- 114: Stellweg
- α: Winkel

## Patentansprüche

1. Lasermikroskop (10) zum Untersuchen einer Probe (16),
mit einer Laserlichtquelle (22), die Laserlichtpulse (23) erzeugt,
einem optischen Element (25), das die Laserlichtpulse (23) spektral verbreitert,
und mit einer Kompensationsvorrichtung (30), in der unterschiedliche Wellenlängen aufweisende Anteile (60, 62) der breitbandigen Laserlichtpulse (32) unterschiedliche Weglängen (96, 97, 98) zurücklegen, so dass die unterschiedlichen Anteile (60, 62) zeitgleich auf die Probe (16) treffen, **dadurch gekennzeichnet, dass** die Kompensationsvorrichtung (30) einen Reflektor (92), einen Stellreflektor (94), einen Strahlteiler (90) und einen Filter (58) umfasst, wobei die Anteile (60, 62) aus dem Filter (58) austreten und auf den Strahlteiler (90) treffen, der einen zweiten Anteil (62) der Anteile (60, 62) hin zu dem Stellreflektor (94) ablenkt und einen ersten Anteil (60) der Anteile (60, 62) hin zu dem Reflektor (92) durchlässt, wobei der erste Anteil (60) hin zu dem Reflektor (92) eine erste Weglänge (96) durchläuft und der zweite Anteil (62) hin zu dem Stellreflektor (94) eine zweite Weglänge (98) und eine Stellweglänge (97) durchläuft und der Stellreflektor (94) entlang der Stellweglänge (97) derart verstellbar ist, dass die Stellweglänge (97) zwischen null und einem Wert größer null so einstellbar ist, dass der erste Anteil (60) und der zweite Anteil (62) nach nochmaligen Durchlaufen des Strahlteilers (90) zeitgleich auf die Probe (16) treffen.

2. Lasermikroskop (10) zum Untersuchen einer Probe (16),
mit einer Laserlichtquelle (22), die Laserlichtpulse (23) erzeugt,
einem optischen Element (25), das die Laserlichtpulse (23) spektral verbreitert,
und mit einer Kompensationsvorrichtung (30), in der unterschiedliche Wellenlängen aufweisende Anteile (60, 62) der breitbandigen Laserlichtpulse (32) unterschiedliche Weglängen (107, 108, 110) zurücklegen, so dass die unterschiedlichen Anteile (60, 62) zeitgleich auf die Probe (16) treffen, **dadurch gekennzeichnet, dass** die Kompensationsvorrichtung (30) einen ersten und einen zweiten Reflektor (102, 104) und einen ersten und einen zweiten Filter (58, 100) umfasst, wobei die Anteile (60, 62) aus dem ersten Filter (58) austreten und auf den zweiten Filter (100) treffen, wobei der zweite Filter (100) bewirkt, dass ein erster Anteil (60) der Anteile (60, 62) einen anderen Weg hin zu dem zweiten Reflektor (104) nimmt als ein zweiter Anteil (62) der Anteile (60, 62), der zu dem ersten Reflektor (102) gelenkt wird, wobei der erste Anteil (60) zwischen dem zweiten Filter (100) und dem zweiten Reflektor (104) eine erste Weglänge (107) durchläuft und der zweite Anteil (62) zwischen dem zweiten Filter (100) und dem ersten Reflektor (102) eine zweite Weglänge (108) und eine Stellweglänge (110) durchläuft und der erste Reflektor (102) entlang einer Bewegungsrichtung (106) derart bewegbar ist, dass die Stellweglänge (110) so einstellbar ist, dass der erste Anteil (60) und der zweite Anteil (62) nach nochmaligen Durchlaufen des Filters (100) zeitgleich auf die Probe (16) treffen.

3. Lasermikroskop (10) zum Untersuchen einer Probe (16),
mit einer Laserlichtquelle (22), die Laserlichtpulse (23) erzeugt,
einem optischen Element (25), das die Laserlichtpulse (23) spektral verbreitert,
und mit einer Kompensationsvorrichtung (30), in der unterschiedliche Wellenlängen aufweisende Anteile (60, 62) der breitbandigen Laserlichtpulse (32) unterschiedliche Weglängen zurücklegen, so dass die unterschiedlichen Anteile (60, 62) zeitgleich auf die Probe (16) treffen, **dadurch gekennzeichnet, dass** die Kompensationsvorrichtung (30) einen Spiegel (112) und eine teildurchlässige Spiegelfläche (111) und einen Filter (58) umfasst, wobei die Anteile (60, 62) aus dem Filter (58) austreten und auf die Spiegelfläche (111) treffen, die einen ersten Anteil (60) der Anteile (60, 62) reflektiert und einen zweiten Anteil (62) der Anteile (60, 62) durchlässt, wobei der erste Anteil (60) eine erste Weglänge zwischen dem Filter (58) und der Spiegelfläche (111) durchläuft und der zweite Anteil (62) eine zweite Weglänge von dem Filter (58) bis zu dem Spiegel (112) durchläuft und dort reflektiert wird und die Spiegelfläche (111) oder der Spiegel (112) entlang eines Stellwegs (114) verstellbar sind, wodurch der Abstand zwischen dem Spiegel (112) und der Spiegelfläche (111) derart einstellbar ist, dass nach nochmaligen Durchlaufen der Spiegelfläche (111) durch den zweiten Anteil (62) der erste Anteil (60) und der zweite Anteil (62) zeitgleich auf die Probe (16) treffen.

4. Lasermikroskop (10) nach einem der vorstehenden Ansprüche,
mit einer Sensorvorrichtung (65), die einen Laufzeitunterschied zwischen den Anteilen (60, 62) erfasst, und mit einer Stellvorrichtung, die abhängig von dem Laufzeitunterschied die in der Kompensationsvorrichtung (30) zurückzulegende Weglänge für zumindest einen der Anteile (60, 62) einstellt.

5. Lasermikroskop (10) nach einem der vorstehenden Ansprüche,
bei dem die unterschiedlichen Anteile (60, 62) nach Durchlaufen der unterschiedlichen Weglängen parallel und versetzt zu den unterschiedlichen Anteilen (60, 62) vor Durchlaufen der unterschiedlichen Weglängen sind.

## Claims

1. Laser microscope (10) for examining a sample (16), having a laser light source (22), which generates laser light pulses (23),
an optical element (25), which spectrally broadens the laser light pulses (23),
and having a compensation device (30), in which components (60, 62) of the broadband laser light pulses (32), said components having different wavelengths, travel along different path lengths (96, 97, 98) so that the different components (60, 62) are incident on the sample (16) at the same time, **characterized in that** the compensation device (30) comprises a reflector (92), an adjustment reflector (94), a beam splitter (90) and a filter (58), wherein the components (60, 62) exit from the filter (58) and are incident on the beam splitter (90), which deflects a second component (62) of the components (60, 62) towards the adjustment reflector (94) and transmits a first component (60) of the components (60, 62) towards the reflector (92), wherein the first component (60) traverses a first path length (96) towards the reflector (92) and the second component (62) traverses a second path length (98) and an adjustment path length (97) towards the adjustment reflector (94), and the adjustment reflector (94) is adjustable along the adjustment path length (97) in such a way that the adjustment path length (97) is settable between zero and a value greater than zero such that the first component (60) and the second component (62) are incident on the sample (16) at the same time after passing through the beam splitter (90) once again.

2. Laser microscope (10) for examining a sample (16), having a laser light source (22), which generates laser light pulses (23),
an optical element (25), which spectrally broadens the laser light pulses (23),
and having a compensation device (30), in which components (60, 62) of the broadband laser light pulses (32), said components having different wavelengths, travel along different path lengths (107, 108, 110) so that the different components (60, 62) are incident on the sample (16) at the same time, **characterized in that** the compensation device (30) comprises a first and a second reflector (102, 104) and a first and a second filter (58, 100), wherein the components (60, 62) exit from the first filter (58) and are incident on the second filter (100), wherein the second filter (100) causes a first component (60) of the components (60, 62) to take a different path towards the second reflector (104) than a second component (62) of the components (60, 62), which second component is directed to the first reflector (102), wherein the first component (60) traverses a first path length (107) between the second filter (100) and the second reflector (104) and the second component (62) traverses a second path length (108) and an adjustment path length (110) between the second filter (100) and the first reflector (102), and the first reflector (102) is movable along a movement direction (106) in such a way that the adjustment path length (110) is settable such that the first component (60) and the second component (62) are incident on the sample (16) at the same time after passing through the filter (100) once again.

3. Laser microscope (10) for examining a sample (16), having a laser light source (22), which generates laser light pulses (23),
an optical element (25), which spectrally broadens the laser light pulses (23),
and having a compensation device (30), in which components (60, 62) of the broadband laser light pulses (32), said components having different wavelengths, travel along different path lengths so that the different components (60, 62) are incident on the sample (16) at the same time, **characterized in that** the compensation device (30) comprises a mirror (112) and a partially transmissive mirror surface (111) and a filter (58), wherein the components (60, 62) exit from the filter (58) and are incident on the mirror surface (111), which reflects a first component (60) of the components (60, 62) and transmits a second component (62) of the components (60, 62), wherein the first component (60) traverses a first path length between the filter (58) and the mirror surface (111) and the second component (62) traverses a second path length from the filter (58) to the mirror (112) and is reflected there and the mirror surface (111) or the mirror (112) are adjustable along an adjustment path (114), as a result of which the distance between the mirror (112) and the mirror surface (111) is settable in such a way that the first component (60) and the second component (62) are incident on the sample (16) at the same time after the second component (62) passes through the mirror surface (111) once again.

4. Laser microscope (10) according to any of the preceding claims,
having a sensor device (65), which detects a propagation time difference between the components (60, 62), and having an adjustment device, which sets the path length to be travelled along in the compensation device (30) for at least one of the components (60, 62) depending on the propagation time difference.

5. Laser microscope (10) according to any of the preceding claims,
wherein the different components (60, 62) after traversing the different path lengths are parallel and offset with respect to the different components (60, 62) before traversing the different path lengths.

## Revendications

1. Microscope à laser (10) destiné à examiner un échantillon (16),
comprenant une source de lumière laser (22) qui génère des impulsions de lumière laser (23),
un élément optique (25) qui élargit spectralement les impulsions de lumière laser (23),
et comprenant un dispositif de compensation (30), dans lequel des parts (60, 62) des impulsions de lumière laser à large bande (32) qui présentent des longueurs d'onde différents parcourent des longueurs de trajet (96, 97, 98) différentes, de sorte que les différentes parts (60, 62) viennent frapper l'échantillon (16) simultanément, **caractérisé en ce que** le dispositif de compensation (30) comporte un réflecteur (92), un réflecteur de commande (94), un diviseur de faisceau (90) et un filtre (58), les parts (60, 62) sortant du filtre (58) et venant frapper le diviseur de faisceau (90), lequel dévie une deuxième part (62) des parts (60, 62) vers le réflecteur de commande (94) et laisse passer une première part (60) des parts (60, 62) vers le réflecteur (92), la première part (60) vers le réflecteur (92) parcourant une première longueur de trajet (96) et la deuxième part (62) vers le réflecteur de commande (94) parcourant une deuxième longueur de trajet (98) et une longueur de trajet de commande (97) et le réflecteur de commande (94) pouvant être positionné le long de la longueur de trajet de commande (97) de telle sorte que la longueur de trajet de commande (97) peut être réglée entre zéro et une valeur supérieure à zéro de manière à ce que la première part (60) et la deuxième part (62) frappent simultanément l'échantillon (16) après être une nouvelle fois passées à travers le diviseur de faisceau (90).

2. Microscope à laser (10) destiné à examiner un échantillon (16),
comprenant une source de lumière laser (22) qui génère des impulsions de lumière laser (23),
un élément optique (25) qui élargit spectralement les impulsions de lumière laser (23),
et comprenant un dispositif de compensation (30), dans lequel des parts (60, 62) des impulsions de lumière laser à large bande (32) qui présentent des longueurs d'onde différents parcourent des longueurs de trajet (107, 108, 110) différentes, de sorte que les différentes parts (60, 62) viennent frapper l'échantillon (16) simultanément, **caractérisé en ce que** le dispositif de compensation (30) comporte un premier et un deuxième réflecteur (102, 104) ainsi qu'un premier et un deuxième filtre (58, 100), les parts (60, 62) sortant du premier filtre (58) et venant frapper le deuxième filtre (100), le deuxième filtre (100) ayant pour effet qu'une première part (60) des parts (60, 62) prend un trajet différent vers le deuxième réflecteur (104) qu'une deuxième part (62) des parts (60, 62), qui est déviée vers le premier réflecteur (102), la première part (60) entre le deuxième filtre (100) et le deuxième réflecteur (104) parcourant une première longueur de trajet (107) et la deuxième part (62) entre le deuxième filtre (100) et le premier réflecteur (102) parcourant une deuxième longueur de trajet (108) et une longueur de trajet de commande (110) et le premier réflecteur (102) pouvant être déplacé le long d'une direction de mouvement (106) de telle sorte que la longueur de trajet de commande (110) peut être réglée de manière à ce que la première part (60) et la deuxième part (62) frappent simultanément l'échantillon (16) après être une nouvelle fois passées à travers le filtre (100).

3. Microscope à laser (10) destiné à examiner un échantillon (16),
comprenant une source de lumière laser (22) qui génère des impulsions de lumière laser (23),
un élément optique (25) qui élargit spectralement les impulsions de lumière laser (23),
et comprenant un dispositif de compensation (30), dans lequel des parts (60, 62) des impulsions de lumière laser à large bande (32) qui présentent des longueurs d'onde différents parcourent des longueurs de trajet différentes, de sorte que les différentes parts (60, 62) viennent frapper l'échantillon (16) simultanément, **caractérisé en ce que** le dispositif de compensation (30) comporte un miroir (112) et une surface de miroir (111) partiellement transparente ainsi qu'un filtre (58), les parts (60, 62) sortant du premier (58) et venant frapper la surface de miroir (111), laquelle réfléchit une première part (60) des parts (60, 62) et laisse passer une deuxième part (62) des parts (60, 62), la première part (60) parcourant une première longueur de trajet entre le filtre (58) et la surface de miroir (111) et la deuxième part (62) parcourant une deuxième longueur de trajet du filtre (58) au miroir (112) et y étant réfléchie et la surface de miroir (111) ou le miroir (112) pouvant être positionné le long d'un trajet de commande (114), moyennant quoi l'écart entre le miroir (112) et la surface de miroir (111) est réglable de telle sorte que la première part (60) et la deuxième part (62) frappent simultanément l'échantillon (16) après que la deuxième part (62) est une nouvelle fois passée à travers la surface de miroir (111) .

4. Microscope à laser (10) selon l'une des revendications précédentes, comprenant un dispositif détecteur (65) qui détecte une différence de temps de propagation entre les parts (60, 62), et comprenant un dispositif de commande qui règle la longueur de trajet à parcourir pour au moins l'une des parts (60, 62) dans le dispositif de compensation (30) en fonction de la différence de temps de propagation.

5. Microscope à laser (10) selon l'une des revendications précédentes, avec lequel les différentes parts (60, 62), après avoir parcouru les différentes longueurs de trajet, sont parallèles et décalées par rapport aux différentes parts (60, 62) avant d'avoir parcouru les différentes longueurs de trajet.
